Europäisches Patentamt

European Patent Office

Office européen des brevets

(19)

(11) EP 1 605 727 A1

(12) EUROPEAN PATENT APPLICATION

(43) Date of publication:
14.12.2005 Bulletin 2005/50

(51) Int Cl.7: H04Q 11/04, H04J 3/16,
H04L 12/43

(21) Application number: 04102607.1

(22) Date of filing: 09.06.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(71) Applicant: Koninklijke Philips Electronics N.V.
5621 BA Eindhoven (NL)

(72) Inventor: The designation of the inventor has not
yet been filed

(74) Representative: de Jong, Durk Jan et al
Philips
Intellectual Property & Standards
P.O. Box 220
5600 AE Eindhoven (NL)

(54) **Integrated circuit and method for time slot allocation**

(57)    An integrated circuit comprising a plurality of processing modules (M, S; IP) and a network (N) arranged for coupling said modules (M, S; IP) is provided. Said integrated circuit further comprises a plurality of network interfaces (NI) each being coupled between one of said processing modules (M, S; IP) and said network (N). Said network (N) comprises a plurality of routers (R) coupled via network links (L) to adjacent routers (R). Said processing modules (M, S; IP) communicate between each other over connections using connection paths (C1-C12) through the network (N), wherein each of said connection paths (C1-C12) employ at least one network link (L) for a required number of time slots. At least one time slot allocating unit (SA) is provided for allocating time slots to said network links (L) for determining unused time slots and for allocation the determined unused time slots to one or more of the connections using said network link in addition to its already allocated time slots.

Fig.8

**Description**

FIELD OF THE INVENTION

The invention relates to an integrated circuit having a plurality of processing modules and a network arranged for coupling processing modules and a method for time slot allocation in such an integrated circuit, and a data processing system.

BACKGROUND OF THE INVENTION

Systems on silicon show a continuous increase in complexity due to the ever increasing need for implementing new features and improvements of existing functions. This is enabled by the increasing density with which components can be integrated on an integrated circuit. At the same time the clock speed at which circuits are operated tends to increase too. The higher clock speed in combination with the increased density of components has reduced the area which can operate synchronously within the same clock domain. This has created the need for a modular approach. According to such an approach the processing system comprises a plurality of relatively independent, complex modules. In conventional processing systems the systems modules usually communicate to each other via a bus. As the number of modules increases however, this way of communication is no longer practical for the following reasons. On the one hand the large number of modules forms a too high bus load, and the bus constitutes a communication bottleneck as it enables only one device to send data to the bus.

A communication network forms an effective way to overcome these disadvantages. Networks on chip (NoC) have received considerable attention recently as a solution to the interconnect problem in highly-complex chips. The reason is twofold. First, NoCs help resolve the electrical problems in new deep-submicron technologies, as they structure and manage global wires. At the same time they share wires, lowering their number and increasing their utilization. NoCs can also be energy efficient and reliable and are scalable compared to buses. Second, NoCs also decouple computation from communication, which is essential in managing the design of billion-transistor chips. NoCs achieve this decoupling because they are traditionally designed using protocol stacks, which provide well-defined interfaces separating communication service usage from service implementation.

Introducing networks as on-chip interconnects radically changes the communication when compared to direct interconnects, such as buses or switches. This is because of the multi-hop nature of a network, where communication modules are not directly connected, but are remotely separated by one or more network nodes. This is in contrast with the prevalent existing interconnects (i.e., buses) where modules are directly connected. The implications of this change reside in the arbitration (which must change from centralized to distributed), and in the communication properties (e.g., ordering, or flow control), which must be handled either by a intellectual property block (IP) or by the network.

Most of these topics have been already the subject of research in the field of local and wide area networks (computer networks) and as an interconnect for parallel machine interconnect networks. Both are very much related to on-chip networks, and many of the results in those fields are also applicable on chip. However, NoC's premises are different from off-chip networks, and, therefore, most of the network design choices must be reevaluated. On-chip networks have different properties (e.g., tighter link synchronization) and constraints (e.g., higher memory cost) leading to different design choices, which ultimately affect the network services.

NoCs differ from off-chip networks mainly in their constraints and synchronization. Typically, resource constraints are tighter on chip than off chip. Storage (i.e., memory) and computation resources are relatively more expensive, whereas the number of point-to-point links is larger on chip than off chip. Storage is expensive, because general-purpose on-chip memory, such as RAMs, occupy a large area. Having the memory distributed in the network components in relatively small sizes is even worse, as the overhead area in the memory then becomes dominant.

Off-chip networks typically use packet switching and offer best-effort services. Contention can occur at each network node, making latency guarantees very hard to offer. Throughput guarantees can still be offered using schemes such as rate-based switching or deadline-based packet switching, but with high buffering costs. An alternative to provide such time-related guarantees is to use time-division multiple access (TDMA) circuits, where every circuit is dedicated to a network connection. Circuits provide guarantees at a relatively low memory and computation cost. Network resource utilization is increased when the network architecture allows any left-over guaranteed bandwidth to be used by best-effort communication.

A network on chip (NoC) typically consists of a plurality of routers and network interfaces. Routers serve as network nodes and are used to transport data from a source network interface to a destination network interface by routing data on a correct path to the destination on a static basis (i.e., route is predetermined and does not change), or on a dynamic basis (i.e., route can change depending e.g., on the NoC load to avoid hot spots). Routers can also implement time guarantees (e.g., rate-based, deadline-based, or using pipelined circuits in a TDMA fashion). More details on a router architecture can be found in, A router architecture for networks on silicon, by Edwin Rijpkema, Kees Goossens, and Paul Wielage, In PROGRESS, October 2001.

The network interfaces are connected to an IP block (intellectual property), which may represent any kind of data processing unit or also be a memory, bridge, etc. In particular, the network interfaces constitute a communication interface between the IP blocks and the network. The interface is usually compatible with the existing bus interfaces. Accordingly, the network interfaces are designed to handle data sequentialisation (fitting the offered command, flags, address, and data on a fixed-width (e.g., 32 bits) signal group) and packetization (adding the packet headers and trailers needed internally by the network). The network interfaces may also implement packet scheduling, which can include timing guarantees and admission control.

On-chip systems often require timing guarantees for their interconnect communication. Therefore, a class of communication is provided, in which throughput, latency and jitter are guaranteed, based on a notion of global time (i. e., a notion of synchronicity between network components, i.e. routers and network interfaces), wherein the basic time unit is called a slot or time slot. All network components usually comprise a slot table of equal size for each output port of the network component, in which time slots are reserved for different connections and the slot tables advance in synchronization (i.e., all are in the same slot at the same time). The connections are used to identify different traffic classes and associate properties to them.

A cost-effective way of providing time-related guarantees (i.e., throughput, latency and jitter) is to use pipelined circuits in a TDMA (Time Division Multiple Access) fashion, which is advantageous as it requires less buffer space compared to rate-based and deadline-based schemes on systems on chip (SoC) which have tight synchronization.

At each slot, a data item is moved from one network component to the next one, i.e. between routers or between a router and a network interface. Therefore, when a slot is reserved at an output port, the next slot must be reserved on the following output port along the path between an master and a slave module, and so on.

When multiple connections with timing guarantees are set up, the slot allocation must be performed such that there are no clashes (i.e., there is no slot allocated to more than one connection). The task of finding an optimum slot allocation for a given network topology i.e. a given number of routers and network interfaces, and a set of connections between IP blocks is a highly computational-intensive problem (NP complete) as it involves finding an optimal solution which requires exhaustive computation time.

It is therefore an object of the invention to provide an improved slot allocation in a network on chip environment.

This object is achieved by an integrated circuit according to claim 1 and a method for time slot allocation according to claim 6 as well as a data processing system according to claim 7.

Therefore, an integrated circuit comprising a plurality of processing modules and a network arranged for coupling said modules is provided. Said integrated circuit further comprises a plurality of network interfaces each being coupled between one of said processing modules and said network. Said network comprises a plurality of routers coupled via network links to adjacent routers. Said processing modules communicate between each other over connections using connection paths through the network, wherein each of said connection paths employ at least one network link for a required number of time slots. At least one time slot allocating unit is provided for allocating time slots to said network links for determining unused time slots and for allocating the determined unused time slots to one or more of the connections using said network links in addition to its already allocated time slots.

Accordingly, those time slots which are unused after the time slot allocation may be utilized for some of the connections such that the latencies of these connections are reduced.

The invention also relates to a method for time slot allocation in an integrated circuit having a plurality of processing modules, a network arranged for coupling said modules and a plurality of network interfaces each being coupled between one of said processing modules. Said network comprises a plurality of routers coupled via network links to adjacent routers. The communication between processing modules is performed over connections using connection paths through the network, wherein each of said connection paths employ at least one network link for a required number of time slots. The time slots which have not been used during the allocation of time slots are determined and allocated to one or more of the connections using said network link in addition to its already allocated time slots.

The invention further relates to a data processing system comprising a plurality of processing modules and a network arranged for coupling said modules. Said integrated circuit further comprises a plurality of network interfaces each being coupled between one of said processing modules and said network. Said network comprises a plurality of routers coupled via network links to adjacent routers. Said processing modules communicate between each other over connections using connection paths through the network, wherein each of said connection paths employ at least one network link for a required number of time slots. At least one time slot allocating unit is provided for allocating time slots to said network links, for determining unused time slots and for allocating the determined unused time slots to one or more of the connections using the network link in addition to its already allocated time slots.

Accordingly, the time slot allocation may also be performed in a multi-chip network or a system or network with several separate integrated circuits.

The invention is based on the idea to utilize those time slots which are unused after the time slot allocation by allocating these unused time slots to connections in the network on chip environment in addition to their already allocated time slots, in order to reduce the latency of such connections.

Other aspects of the invention are defined in the dependent claims.

The invention is now described in more detail with reference to the drawings.

Fig. 1 shows the basic structure of a network on chip according to the invention;

Fig. 2 shows a basic slot allocation for a connection in a network according to Fig. 1;

Fig. 3 shows a slot allocation in more detail in a network according to Fig. 1;

Fig. 4 shows a more detailed slot allocation according to the invention;

Fig. 5 shows a more detailed slot allocation according to the invention;

Fig. 6 shows a more detailed slot allocation according to the invention;

Fig. 7 shows a network on chip environment according to a first embodiment;

Fig. 8 shows a section of the network on chip environment of Fig. 7;

Fig. 9 shows an illustration of a method for finding free slots;

Fig. 10 shows a network on chip with several connections;

Fig. 11 shows a network on chip according to Fig. 9 with computed link weight;

Fig. 12 shows a network on chip according to Fig. 10 with computed connection weights; and

Fig. 13 show a detailed slot allocation for all connections according to Fig. 10.

DESCRIPTION OF THE PREFERRED EMBODIMENTS

The following embodiments relate to systems on chip, i.e. a plurality of modules on the same chip communicate with each other via some kind of interconnect. The interconnect is embodied as a network on chip NOC. The network on chip may include wires, bus, time-division multiplexing, switch, and/or routers within a network. At the transport layer of said network, the communication between the modules is performed over connections. A connection is considered as a set of channels, each having a set of connection properties, between a first module and at least one second module. For a connection between a first module and a single second module, the connection may comprises two channels, namely one from the first module to the second module, i.e. the request channel, and a second channel from the second to the first module, i.e. the response channel. The request channel is reserved for data and messages from the first to the second, while the response channel is reserved for data and messages from the second to the first module. If no response is required, the connection may only comprise one channel. However, if the connection involves one first and N second modules, 2*N channels are provided. Therefore, a connection or the path of the connection through the network, i.e. the connection path comprises at least one channel. In other words, a channel corresponds to the connection path of the connection if only one channel is used. If two channels are used as mentioned above, one channel will provide the connection path e.g. from the master to the slave, while the second channel will provide the connection path from the slave to the master. Accordingly, for a typical connection, the connection path will comprise two channels. The connection properties may include ordering (data transport in order), flow control (a remote buffer is reserved for a connection, and a data producer will be allowed to send data only when it is guaranteed that space is available for the produced data), throughput (a lower bound on throughput is guaranteed), latency (upper bound for latency is guaranteed), the lossiness (dropping of data), transmission termination, transaction completion, data correctness, priority, or data delivery.

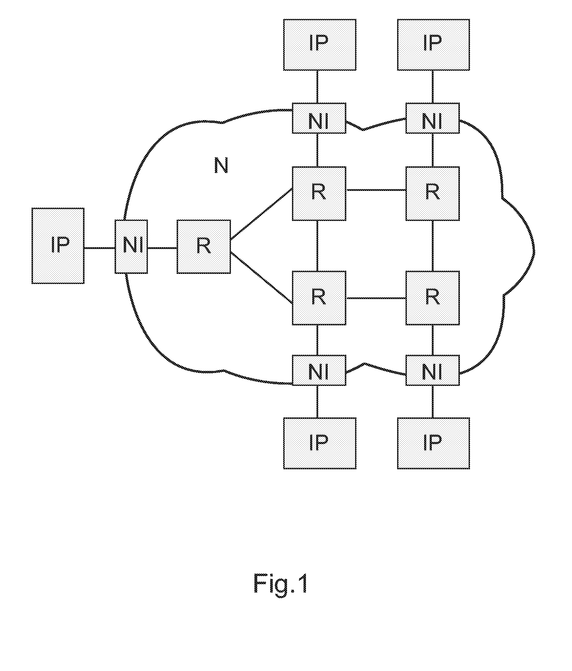

Fig. 1 shows a network on chip according to the present invention. The system comprises several so-called intellectual property blocks IPs (computation elements, memories or a subsystem which may internally contain interconnect modules) which are each connected to a network N via a network interface NI, respectively. The network N comprises a plurality of routers R, which are connected to adjacent routers R via respective links.

The network interfaces NI are used as interfaces between the IP blocks and the network N. The network interfaces NI are provided to manage the communication of the respective IP blocks and the network N, so that the IP blocks can perform their dedicated operation without having to deal with the communication with the network N or other IP blocks. The IP blocks may act as masters, i.e. initiating a request, or may act as slaves, i.e. receiving a request from a master and processing the request accordingly.

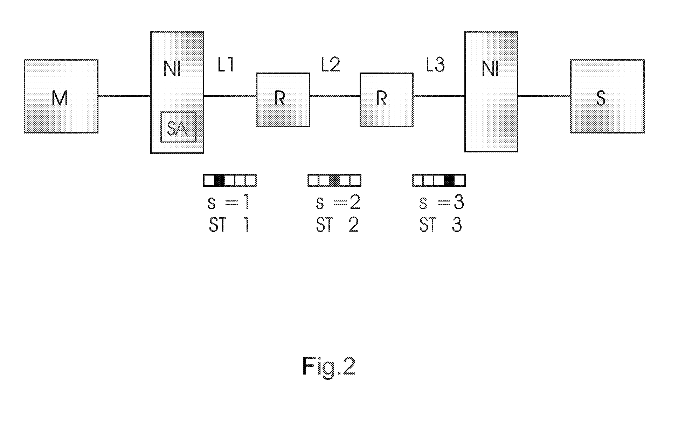

Fig. 2 shows a block diagram of a connection and a basic slot allocation in a network on chip according to Fig. 1. In particular, the connection between a master M and a slave S is shown. This connection is realized by a network interface NI associated to the master M, two routers, and a network interface NI associated to a slave S. The network interface NI associated to the master M comprises a time slot allocation unit SA. Alternatively, the network interface NI associated to the slave S may also comprise a time slot allocation unit SA. A first link L1 is present between the network interface NI associated to the master M and a first router R, a second link L2 is present between the two routers R, and a third link L3 is present between a router and the network interface NI associated to the slave S. Three slot tables ST1 - ST3 for the output ports of the respective network components are also shown. These slot tables are preferably implemented on the output side, i.e. the data producing side, of the network elements like network interfaces and routers. For each requested slot, one slot is reserved in each slot table of the links along the connection path. All these slots must be free, i.e., not reserved by other channels. Since the data advance from one network component to another each slot, starting from slot s=1, the next slot along the connection must be reserved at slot s=2 and then at slot s=3.

The inputs for the slot allocation determination performed by the time slot allocation unit SA are the network topology, like network components, with their interconnection, and the slot table size, and the connection set. For every connection, its paths and its bandwidth, latency, jitter, and/or slot requirements are given. A connection consists of at least two channels or connection paths (a request channel from master to slave, and a response channel from slave to master). Each of these channels is set on an individual path, and may comprise different links having different bandwidth, latency, jitter, and/or slot requirements. To provide time related guarantees, slots must be reserved for the links. Different slots can be reserved for different connections by means of TDMA. Data for a connection is then transferred over consecutive links along the connection in consecutive slots.

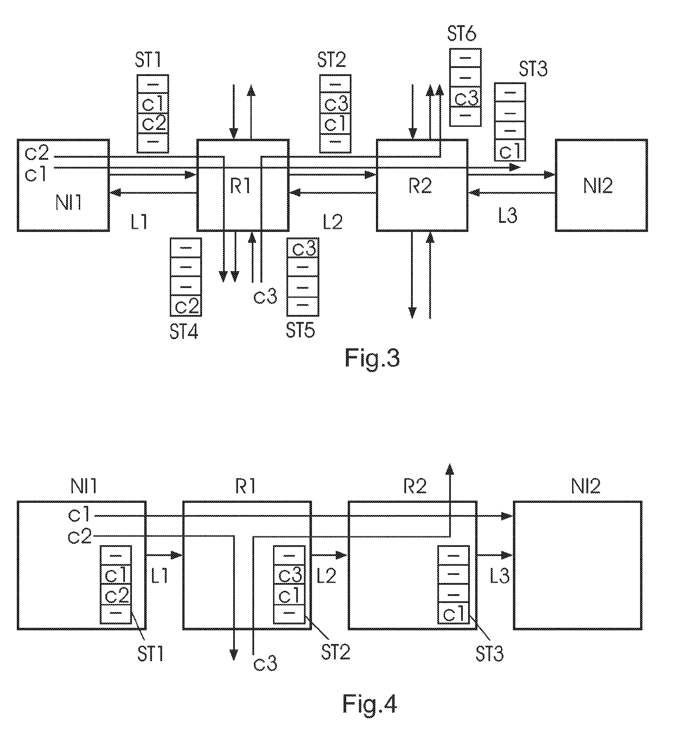

Fig. 3 shows a table implementation of Fig. 2 in more detail. Here, two network interfaces NI1, NI2 and two routers R1, R2 and the three links L1 - L3 between the network interface NI1 and the router R1, between the router R1 and the router R2, and between the router R1 and the network interface NI2 are shown, respectively. The IP blocks are not shown. The slot tables ST1 - ST3 are shown for each of the labeled link L1 - L3. These links are bi-directional, and, hence, for each link there is a slot table for each of the two directions; the slot tables ST1 - ST3 are only shown for one direction. Additionally, three connections c1 - c3 are depicted. In addition to the above three slot tables ST1 - ST3, further slot tables ST4 - ST6 are shown. Now all slot tables ST1 - ST6 are shown which are related to the three connections c1-c3. The first connection c1 extends from the network interface NI1 to the network interface NI2 via the routers R1 and R2. The second connection c2 extends from the network interface NI1 to the router R1 and then to a further network component (not shown) using slot table ST4. The third connection c3 may originate from a not shown network component and passes from the router R1 to the router R2 and further to another not shown network component using slot table ST6. The connection c1 reserves one slot in each of the three links L1 - L3 it uses (NI1 to R1, R1 to R2, and R2 to NI2). The slots in these links must be consecutive (slot 2, slot 3, and slot 4, respectively). From a router point of view, in a time slot, the router receives data from input links, on the connection c1 - c3 those links L1 - L3 are reserved for. The data is stored in the router. At the same time, the router sends the data it has received the previous slot to output links. According to this model, as the data is stored in a router for at most one slot, the slots of a connection must be reserved consecutively.

A possible generalization or alternative of the slot allocation problem would be to allow data to be buffered in the routers for more than one slot duration. As a result, slot allocation becomes more flexible, which could lead to better link utilization, at the expense of more buffering, and potentially longer latencies.

Slots must be reserved such that there are no conflicts on links. This is, there are no two connections that reserve the same slot of the same link. Therefore, C1 reserves slot 2 for the link between NI1 and R1. Consequently, C2 cannot use slot 2 for the same link.

Fig. 4 shows a straightforward slot table implementation by implementing for each of the first, second and third links L1 - L3 a table which specifies which slots are reserved for which connection. In particular, only those slot tables ST1 - ST3 are shown, which are required by the three connections c1 - c3 for the three links L1 - L3. A preferred place to store this table is in the router/network interface producing data for that link, i.e. the output port, because the router/network interface has to know, when a link is reserved or not, in order to produce data for that link. The table may also be part of the time slot allocation unit SA.

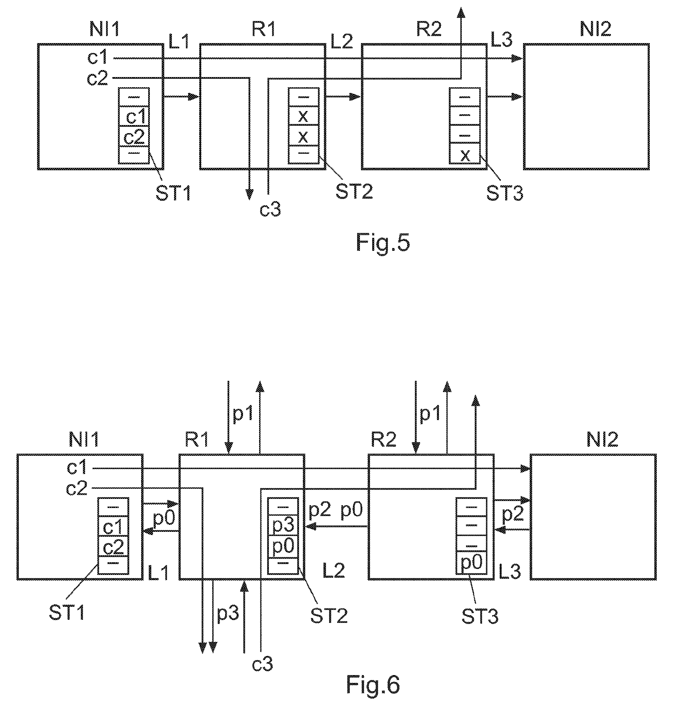

Fig. 5 shows a more efficient slot-allocation encoding. Here, also only those slot tables ST1 - ST3 are shown, which are required by the three connections c1 - c3 for the three links L1 - L3. The information to which connection a slot belongs is stored in the network interface NI and in particular in the time slot allocation unit SA, while the slot tables ST1-ST3 in the routers only mark if a slot is reserved or not for the links. The routers need not know the connections associated with slots, as they only moves data from one network element to another and finally to the correct output based on the packet headers (containing a destination address or a path to destination).

In Fig. 6, a possible variation to the above encoding of Fig. 4 and Fig. 5 is shown. Here, the routing information is stored in the router itself (instead of the packet header). In output port slot tables ST1 - ST3, slots indicate from which input data is consumed. In this way, the packet header can be omitted, leading to more throughput, at the expense of larger slot tables in the routers.

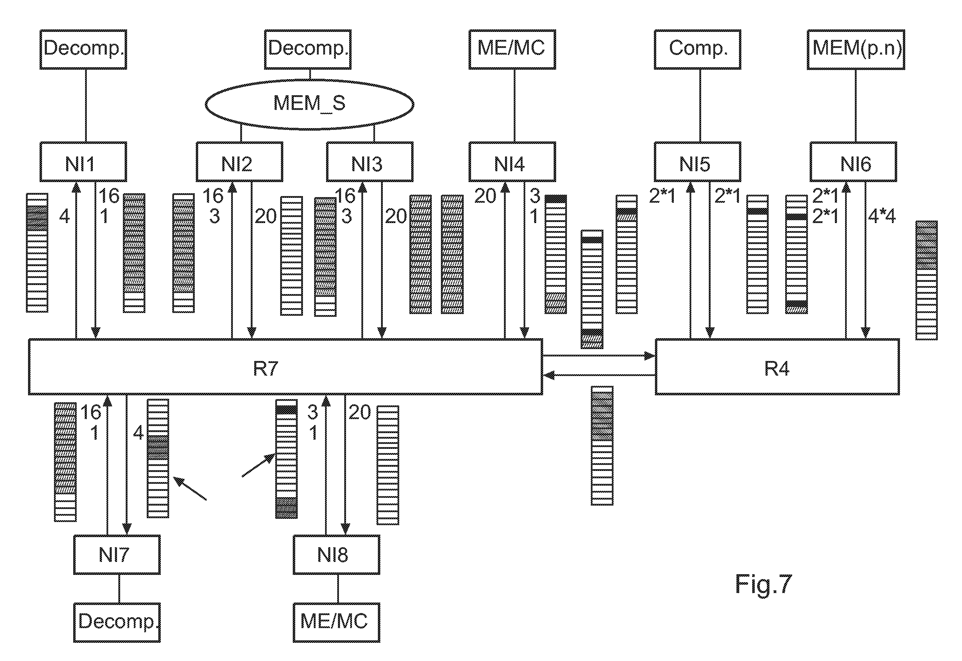

Fig. 7 shows a network on chip according to the preferred embodiment of the invention. The network on chip comprises two routers R7, R4 a 7x7 router and a 4x4 router, respectively. These two routers are connected to further IP blocks via eight network interfaces NI1-NI8, respectively. The IP blocks are a decomp (decompressor) unit, a L0 memory unit, a ME/MC (Motion estimation/motion compensation) unit, a comp (compression) unit, a memory MEM, a further decomp unit, and a further ME/MC unit, respectively. As the particular function of the respective IP blocks are not important for describing the principles of the present invention, a detailed description thereof will be omitted.

In addition, Fig. 7 shows two slot tables for each link between of the network interfaces NI and the router R7, R4. In particular, one slot table is provided in forward direction and one slot table is provided reverse direction, respectively. Furthermore, two slot tables are provided at the link between the routers for communicating between the two routers R7, R4, i.e. one in forward direction and one in reverse direction. Thus, in total 18 slot tables are shown for the nine links in this network on chip. Note that 18 slot tables are shown in the figure but physically there can be only 8 slot tables as only one slot table (e.g. forward) is necessary for one network interface and router may not need any slot tables at all.

In Fig. 7 a situation is shown after a time slot allocation is performed for some connections within this network on chip. It can be seen that some of the slot tables are fully reserved (e.g. the forward direction slot table associated to the second network interface NI2 and the third network interface NI3 as well as the reverse direction slot tables associated to the fourth and eighth network interface NI4, NI8). In some of the other slot tables, for example the forward and reverse direction slot tables associated to the fifth network interface NI5 merely 2 of the 20 time slots have been reserved.

In the 18 slot tables the reserved slot is indicated by a gray box while any free time slots are indicated by a white box. Here, all 18 slot tables comprise 20 time slots in order to keep them synchronized. For example, the forward direction slot table in the link between the first network interface NI1 comprises 17 reserved and 3 free time slots. From the 17 reserved time slots, 16 of these time slots may be associated to one connection while one reserved time slot may be associated to a further connection. In addition, the forward direction slot table in the link between the eighth network interface NI8 and the router R7 comprises four reserved and 16 empty slots.

The reason why many of the 18 slot tables have empty slots, i.e. which have not been reserved, is that the data rate needed for the different IP blocks is smaller than the available data rate. The slot table size constitutes a compromise in order to fulfill the connection requirements for all connections in this network on chip. The slot table allocation algorithm used to allocate the respective time slots in the slot tables is designed to minimize the slot table fragmentation, i.e. the empty slots in the different slot tables, for all slot tables. Accordingly, this algorithm maps all connections within the network on chip to the available slot tables whereby minimizing the completely unusable slots. From the utilization point of view such a time slot allocation is preferable, as it uses a minimum number of time slots in the slot tables. However, the latency introduced by such a time slot allocation is in some cases far from being optimal. For example, the forward direction slot table associated to the eighth network interface NI8 comprises 4 reserved time slots from the 20 available time slots. Hence, as 16 time slots are free, the worst case scenario would be that they have to wait for up to 16 cycles. However, the unused or free time slots are employed in order to reduce the latency of a connection from one IP block to another IP block.

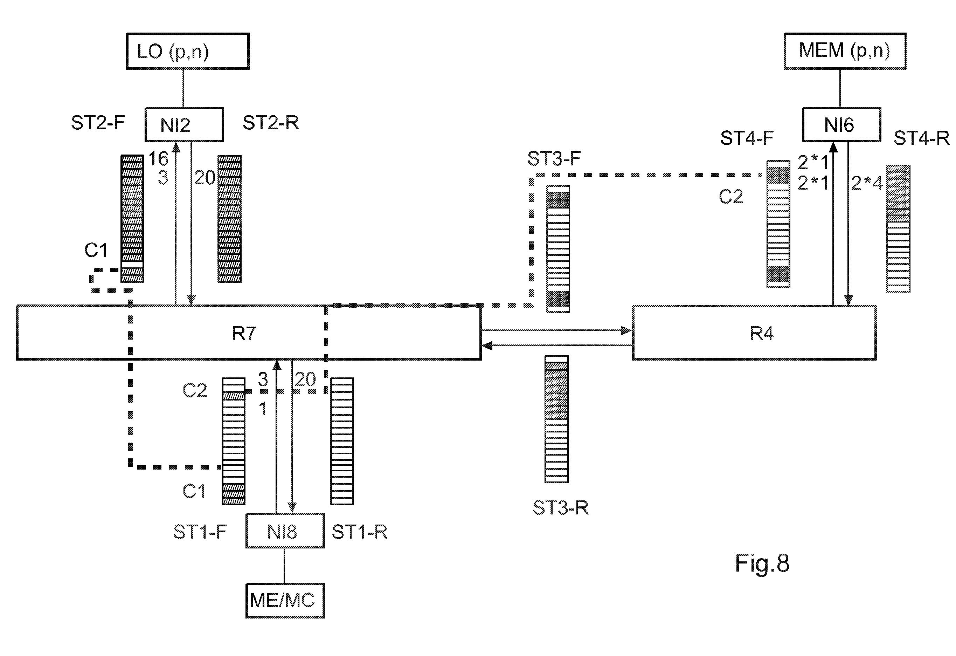

Figure 8 shows selected elements from the network on chip according to Figure 7. Hence, all elements which are not required have been omitted for in Figure 8. In particular, the two routers R7, R4, the second, sixth and eighth network interfaces NI2, NI6, NI8 as well as their respective forward and reverse direction slot tables are shown. In addition, the forward and reverse direction slot tables associated to the two routers R7, R4 are also shown in Fig. 8. Furthermore, two connections C1, C2 are also depicted in Figure 8. The first connection C1 requires 3 time slots in order to communicate from the ME/MC to the L0 memory via the eighth network interface NI8, its associated slot table ST1-F and ST1-R, the slot table 2, ST2-F and ST2-R, associated to the second network interface, and the second network interface NI2. The second connection C2 requires one time slot in order to communicate from the ME/MC via the eighth network interface NI8, its associated forward direction slot table ST1-F, the router R7, the slot table ST3-F associated between the two routers, R7, R4, the slot table ST4-F, the sixth network interface NI6 to the memory MEM.

As the connection C1 merely passes through the router R7, only two slot tables in the forward direction, namely slot tables ST1-F and ST2-F, as well as two slot tables in reverse direction, namely ST1-R and ST2-R, have to be aligned in order to guarantee the required latency as well as throughput. In the case of the second connection C2 three slot tables in forward direction, namely ST1-F, ST3-F and ST4-F and three slot tables in reverse direction, namely ST1-R, ST3-R and ST4-R have to be aligned.

As mentioned above, the latency of a connection depends on the distance between two allocated time slots in the slot table. Accordingly, the still unused time slots are allocated to some of the existing connections in order to reduce the latency of the connection. The number of additional time slots, i.e. the unused of free time slots, which may be allocated to a connection as means of latency reduction is the minimum number of time slots available in each slot table along a connection path for transferring data from one side of the network on chip to the other. As mentioned above, consecutive time slots should be reserved along the slot tables in the connection path.

As merely one time slot is still available in the slot table ST2-F associated to the second network interface NI2, while 16 time slots are still available in the slot table ST1-F, only one slot may be used for latency reduction within the first connection C1. Within the three slot tables ST1-F, ST3-F, ST4-F 15, 16 and 16 slots are available, respectively for the second connection C2.

Accordingly, one additional slot can be allocated to the first connection C1 and 15 additional slots may be allocated to the second connection C2. Therefore, the waiting time of latency for the worst case, i.e. the total number of slots in the slot table minus the number of allocated time slots, for the first connection C1 is reduced from 17 (20 time slots - 3 reserved slots) to 16 (20 slots - (3 allocated slots + 1 latency reduction slot)). The waiting time in the worst case scenario for the second connection C2 is reduced from 19 (20 slots - 1 allocated slot) to 4 (20 slots - (1 allocated slot + 15 slots for latency reduction)). Accordingly, the efficiency of the latency reduction greatly depends on the amount of free or unused time slots after performing the slot allocation. Utilizing the unused or free time slots after the slot allocation is in so far advantageous as this technique does not introduce any costs or complexity as merely those slots are utilized which could have been wasted without performing this technique according to the present invention.

Although the principles of the preferred embodiment is only described for the connections of one slot table, the same technique is also applicable for any connections within the slot table within a network on chip. If the technique of utilizing the unused slots for latency reduction is been performed within the network on chip comprising a plurality of connections as well as a plurality of slot tables, then the unused and free slots available for latency reduction have to be divided or shared between the connections using the slot tables with unused slots or latency redundancy slots.

Preferably, different priorities may be associated to the connections within the network on chip such that those connections which require an increase latency reduction may be served firstly. This may be achieved by storing a priority list in the time slot allocation unit.

In order to further improve the identification of unused slots which may be used for the latency reduction, the slot allocation unit SA can mark the respective time slots as used, unused or reserved to latency reduction. For such an implementation of a marker unit MU within the slot allocation unit SA a marker with three values instead of two must be provided. The third value, i.e. reserved for latency reduction, may allow the utilization of these slots for any other purposes. Such an implementation of the marker will not affect the guaranteed throughput of the connection.

It should be noted that the actual available reduction of latency will depend on the slot allocation for a given connection and the location of unused slots in the slot tables in the network on chip environment. The advantages of the above described improved slot allocation technique are that the latency of a connection for transferring data is reduced. This implementation of the latency reduction will not be accompanied with any additional costs or complexity. The only increase in complexity is introduced by a reduce latency bit. This bit may be placed in the slot tables within the network on chip environment or within a centralized administration unit storing the properties of the connections. In addition, a further marker is provided to indicate that the marked slots can be utilized for other purposes, i.e. the may be configured to be utilized for another connection, without affecting the guaranteed throughput of the respective connections.

The latency reduction slot allocation may be performed after a slot allocation or may be used in parallel from the start of a slot allocation. This latency reduction slot allocation may be used in multiple synchronized TDMA but also in single TDMA systems (e.g. Sonics back plane).

Now the actual slot allocation function is described, which may be implemented in the time slot allocation unit SA before the above determination of unused slots. The result leads to a slot allocation which corresponds to the slot requirements. For each link in the path of the connection, a weight is computed as a function of the bandwidth, latency, jitter priority and/or number of slots requested for each channel $ch_i$ in the connection path that uses that link:

$$weight(link) = f\ (bandwidth(ch_i),\ latency(ch_i),\ jitter(ch_i),\ priority(ch_i),\ slots(ch_i))\ \forall ch_i\ such\ that\ link \in ch_i$$

Alternatively, for each link in the at least one channel in the connection path a weight is computed as a sum of the number of slots requested or required for each connection path, i.e. each channel, that uses that link:

$$weight(link) = \sum_{link \in path(channel)} slots(channel)$$

Then for each channel in a connection path, a weight is computed as a function (e.g., the sum) of the weights of the links in the channel path as part of the connection path), and possibly other properties of the channel (e.g., bandwidth, latency, priority):

$$weight(ch) = f\ (weight(link_i),\ bandwidth(ch),\ latency(ch),\ jitter(ch),\ priority(ch),\ slots(ch))\ \forall link_i \in ch$$

Or, alternatively, for each channel(i.e. each connection path), a weight is computed as the sum of the weights of the links in the channel path:

$$weight(channel) = \sum_{link \in path(channel)} weight(link)$$

For the alternative above simple functions,

$$weight(link) = \sum_{link \in path(channel)} slots(channel)$$

$$weight(channel) = \sum_{link \in path(channel)} weight(link)$$

this algorithm may be implemented by the following pseudo code:

```
- Compute link weights
FOR all channels C DO
    FOR all link L ∈ path(C) DO
        weight[L] + = slots[C]
    END FOR
END FOR

- Compute channel weights
FOR all channels C DO
    FOR all link L ∈ path(C) DO
        weight[C] + = weight[L]
    END FOR
END FOR

- Perform slot allocation
BEGIN
FOR all channels C sorted decreasingly by weight(C) DO
    Find slots[C] free slots and allocated them to C
END FOR
```

Slots are allocated to the channels in the decreasing order of their calculated weights. For each requested slot, there is one slot reserved in each slot table of the links along the channel path. All these slots must be free, i.e. not reserved previously by other channels. These slots may be allocated in a trial and error fashion: starting from a particular slot, a number of slots are checked until a free one is found in all of the links along the path.

Slots can be tried for allocation using different policies. Examples are consecutive slots, or evenly distributed slots. The reason multiple policies are needed is that different properties can be optimized with different policies. For example, consecutive slots may reduce header overhead, while evenly distributed slots may reduce latency.

The proposed technique has a low complexity of O(C x L x S), where C is the number of channels, L is the number of links, and S is the slot table size. The slot allocations obtained with this algorithm are comparable to the optimum (obtained at a much higher complexity: $O(S^\circ)$), and a factor of 2 better than a greedy algorithm (i.e., with a random order for channel allocation).

An alternative example algorithm is now described. Again, for each link, a weight is computed as the sum of the number of slots requested for each channel that uses that link:

$$weight(link) = \sum_{link \in path(channel)} slots(channel)$$

Then for each channel, a weight is computed as the sum of the weights of the links the channel path:

$$weight(channel) = a_1 \times \sum_{link \in path(channel)} weight(link) + a_2 \times length(channel) + a_3 \times slots(channel)$$

where $a_1$, $a_2$, and $a_3$ are constants (this is an example of weight formulas, but others are also possible).

This example algorithm may be implemented by the following pseudo code:

```
- Compute link weights
FOR all channels C DO
FOR all link L ∈ path(C) DO
weight[L] += slots[C]

END FOR

END FOR


- Compute channel weights
FOR all channels C DO
  FOR all link L ∈ path(C) DO
weight[C] += weight[L]
END FOR
  weight[C] = a₁ x weight[C] + a₂ x length[C] + a₃ x slots[C]
END FOR

- Perform slot allocation
BEGIN



FOR all channels C sorted decreasingly by weight(C) DO
Find slots[C] free slots and allocate them to C
END FOR
```

The computation of the link weights according to the second embodiment is as described in the first code, but the channel weights are calculated differently. The idea behind this channel weight formula is to start the scheduling with the channels requiring more slots as they pass through frequently used links, i.e. going through hot spots (links with a high load, and, hence, a large slot to be reserved), and channels having long paths by given a higher weight such that they are scheduled first. The reason is that these connections have more constraints, and, therefore, if left at the end, have less chances to find free slots. As opposed to that, shorter channels going through less utilized links, have more freedom in finding slots, and can thus be left toward the end of the slot allocation.

Slots may be allocated to the channels (i.e. each connection path) in the decreasing order of their computed weights. For each requested slot, there is one slot reserved in each slot table of the links along the channel path as shown in Fig. 2. All these slots must be free, i.e., not reserved previously by other channels (i.e. each connection path). These slots are allocated in a trial and error fashion: starting from a particular slot, slots are checked until the required number of slots are found free in all links along the path. An example algorithm trace is presented in the following section.

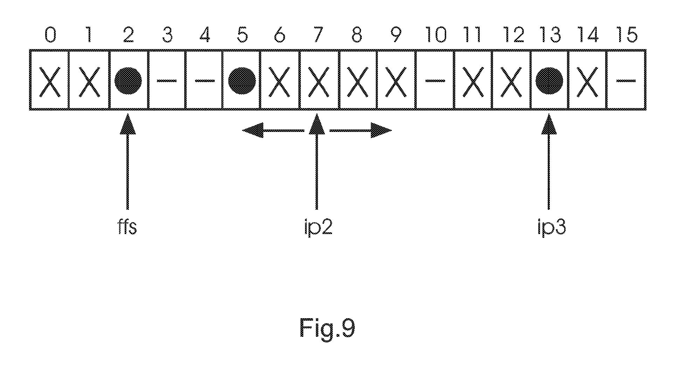

Fig. 9 shows a method of finding free time slots. Here, as an example, a slot table of size 16 is depicted. The slot finding process can be performed in various ways. One example is to find slots in a greedy way, i.e., the first N free slots. Another example is to find slots equally distanced in order to minimize buffer space. This can be done by finding a first free slot ffs, then computing the positions that are equally distanced in the slot table, and then searching locally around the computed positions to find the nearest free position. The slots that are already reserved are marked with a cross in Fig. 9. The first free slot ffs is slot 2. As there are 16 slots, the ideal positions (2nd position ip2, 3rd position ip3) for the other two slots would be slot 7 and 13 (to get an equal distance between them), respectively. As slot 7 is already reserved, a free slot is searched in the neighborhood of slot 7. The nearest free slot found is slot 5. As slot 13 is free, and it can be reserved as well. Consequently, the three slots reserved are 2, 5, and 13 and are marked with a black ball.

It should be noted that free slots for a connection are those that are free along the complete path, i.e. consecutive time slots should be free in consecutive links along the path. Therefore, all slot tables along a connection path must be checked to find a free slot for a particular connection. A simple way of searching free slots for a connection is to start from the first link of the connection, and try all subsequent slot tables along the path, skipping those reserved. To minimize the searching time, one may also start from the most loaded link.

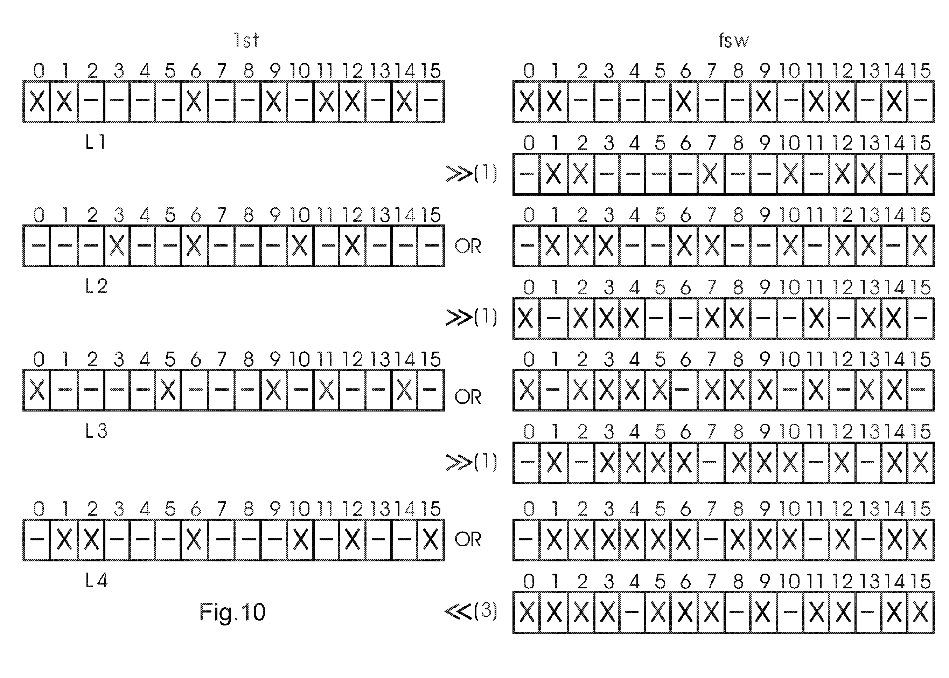

Fig. 10 shows another technique to speed-up the searching of free slots for the case where only the slot reservation is stored (using 1 bit) as described in Fig. 5. It is based on checking multiple slots in parallel. This can be performed both in hardware (a unit to check any fixed number of bits, i.e. the time slot allocation unit SA), and in software (CPU data words can store e.g., 16 or 32 slot reservation simultaneously). On the left hand side of Fig. 10 slot tables 1st for links L1 to L4 are shown as an example. On the right hand side free slot words fsw , which are used to determine the free slots along the path are shown. Free slots are found by traversing the slot tables and filtering the reserved ones, and shifting ($>>(1)$) the searched slots with one position at each link (corresponding to the required slot alignment). Firstly, the first link Llof the path is chosen, which comprises reserved slots 0, 1, 6, 9, 11, 12, and 14. These slots are marked as reserved , e.g. by an 'X' in the free slot word. Thereafter, the free slot word fsw is shifted with one position to the right to reflect the slot alignment, and OR-ed, i.e. an OR operation is performed, to add the reserved slots of the second link (slots 3, 6, 10, and 12). These steps are repeated for the third and fourth link L3, L4, which results in a vector of free slots in all the links along the path. To align it to the first link L1, it is shifted to the left with three position. The result is that slots 4, 8, 10, and 13 of the first link L1 are free in all links L1 - L4 along the given path. In particular, slot 4 is free for link L1, while slots 5, 6, and 7 are free for links L2, L3 and L4, respectively. Slot 8 is free in link L1, while slots 9, 10, and 11 are free for links L2, L3 and L4, respectively. In addition, slot 10 is free in link L1, while slots 11, 12, and 13 are free for links L2, L3 and L4, respectively. Slot 13 is free in link L1, while slots 14, 15, and 1 are free for links L2, L3 and L4, respectively.

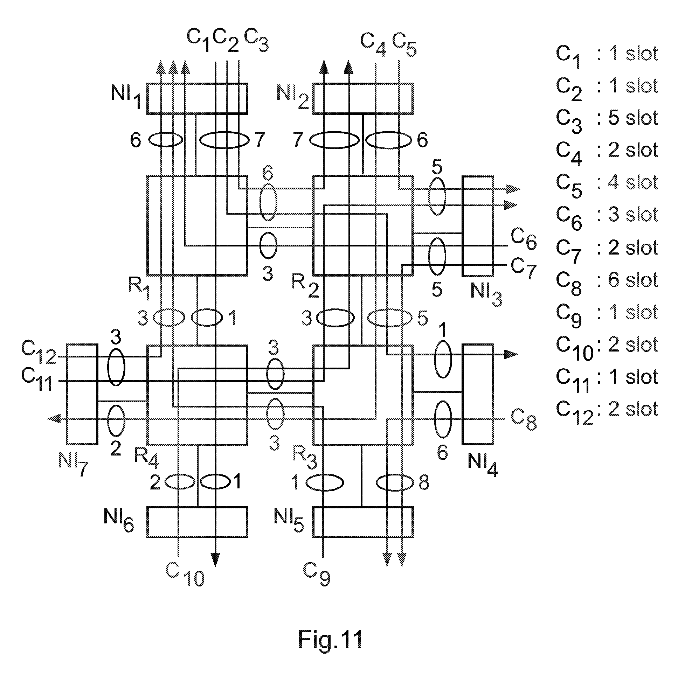

Fig. 11 shows an example of a network on chip consisting of 4 routers R1 - R4 and 7 network interfaces NI (NI1 - NI7). The IP block, with which the network interfaces are connected, are not shown. As an example 12 connections C1 - C12 are selected. These connections are used to transport data between (the not shown) IP modules attached to network interfaces NIs, and, therefore, the connections are always set between two network interfaces NIs. For the sake of simplicity, we assume that all connections are unidirectional (consist of one channel), although in practice bidirectional connections (two channels) may also exists. For example, connection C1 starts at NI1, and goes through R1 and R4 to reach N16. Similarly, connection C2 goes through NI1, R1, R2, R3, and NI4. Connection C3 goes through NI1, R1, R2 and NI2. Connection C4 goes through NI2, R2, R3, R4, and NI7. Connection C5 goes through NI2, R2, and NI3. Connection C6 passes through NI3, R2, R1, and NI1. Connection C7 passes through NI3, R2, R3, and NI5. Connection C8 passes though NI4, R3, and NI5. Connection C9 passes though NI5, R3, R4, R1, and NI1. Connection C10 passes though NI6, R4, R3, R2, and NI2. Connection C11 passes though NI7, R4, R3, R2, and NI3. Connection C12 passes though NI7, R4, R1, and NI1. For each connection, a number of slots must be reserved. These numbers are listed on the right side of the Fig. 9, i.e. connection C1-C12 require 1, 1, 5, 2, 4, 3, 2, 6, 1, 2, 1, and 2 slots, respectively.

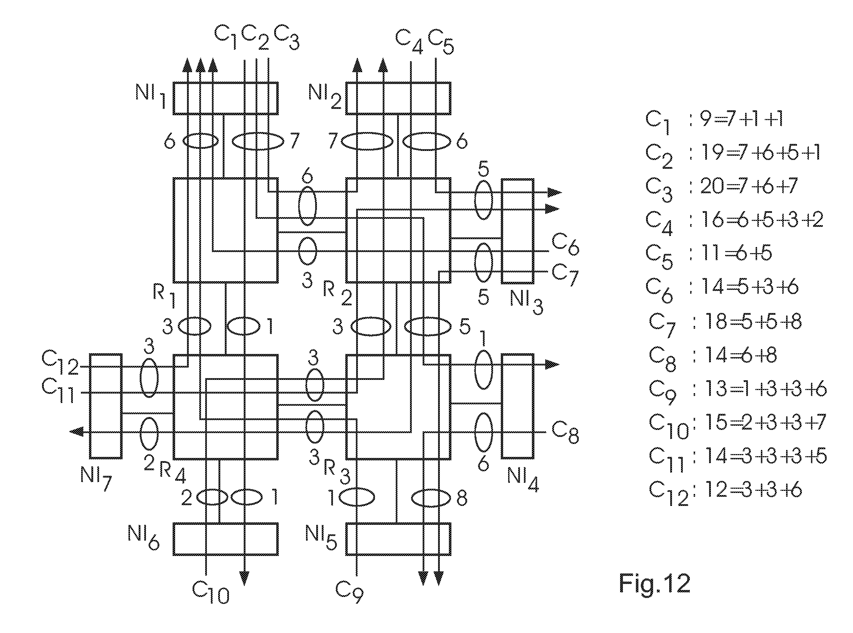

Fig. 12 shows a network on chip according to Fig. 11. The algorithm starts by computing the link weights. This is done by summing for each link the number of slots requested for all the connections that use that link. This is performed separately for each direction. The links are encircled and a link weight result is written next to it. For example, for the link from R2 to R3 the slots requested by connections C2, C4 and C7 are added. This results in a link weight of 1 (C2) + 2 (C4) + 2 (C7) = 5. The link between NI1 and R1 requires 7 slots, the link between R1 and NI1 6 slots etc. The algorithm computes the connections weights. In the connection weight formula, a1 = 1, a2 = 0, and a3 = 0 (i.e., sum link weights). Alternatively, different values may be selected. The result of the connection weight are shown on the right hand side of Fig. 11. For example, the weight of connection C1 is the sum of the weights of links NI1 to R1, R1 to R4, and R4 to NI10, which is 7+ 1+ 1 = 9. The connections are then sorted decreasingly with regard to the computed weight factor, and scheduled in that order.

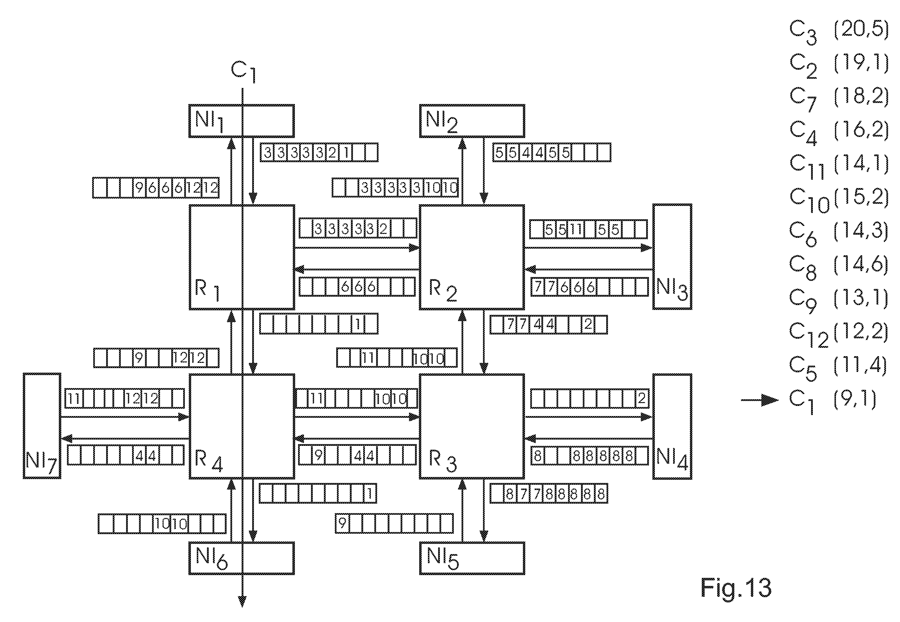

In Figure 13, the time slot allocation for all connections C1 - C12 is shown. It is assumed that firstly the required free slots are allocated. As an example, the slot tables have a size of 9 slots. The depicted numbers in the slot tables correspond to the respective connections C1-C12 to which these slots have been allocated to.

For connection C3 requiring 5 slots, all slots are free, and, hence slots 1 to 5 of link NI1 to R1, slots 2-6 of the link R1 to R2, and slots 3-8 of the link R2 to NI2 are allocated to it. For connection C2 requiring one slot, the first 5 slots are already reserved in the first link, and, hence, it reserves slot 6, 7, 8 and 9 in the respective slot tables along the path. Connection C7 requiring 2 slots has no conflicts in the first two slots, and, therefore, allocates them. Connection C4 requiring 2 slots can only reserve slots 3 and 4, as the first two are reserved for C7 in the second link (R2 to R3). Connection C11 again has no conflicts, and reserves the first slot in the slot table in the link of network interface NI7 and router R4 as well as the consecutive slots in the slot tables in the other links.

In the case of connection C10 requiring 2 slots, however, the first 4 slots conflict with the slots reserved for C3 in the link R2 to NI2, and, hence, the first free slots are 5 and 6. Connection C6 allocates three slots, namely slots 3-5, in the link of network interface NI3 and router R2; slots 4-6 in the slot table of the link of router R2 and router R1; and slots 5-7 in the slot table in the link of router R1 and network interface NI1. Connection C8 allocates 6 slots, namely slots 1, 4-8, in the link of network interface NI4 and router R3; and slots 2, 5-9 in the slot table of the link of router R3 and network interface NI5, as the slots 3-4 in the slot table of the link of router R3 and the network interface NI5 are already allocated or reserved to connection 7.

Connection C9 allocates one slot, namely slots 1, in the link of network interface NI5 and router R3; slot 2 in the slot table of the link of router R3 and router R4; slot 3 in the slot table of the link of router R4 and router R5; and slot 4 in the slot table in the link of router R1 and network interface NI1. Connection C12 allocates two slots, namely slots 6-7 in the link of network interface NI7 and router R4; slots 7-8 in the link of router R4 and router R1; and slots 8-9 in the slot table of the link of router R1 and network interface NI1, as the slot 4 and slots 5-7 in the slot table of the link of router R1 and the network interface NI1 are already allocated to connection C9 and C6, respectively.

Connection C5 allocates 4 slots, namely slots 1-2 and 5-6, in the slot table of the link of network interface NI2 and router R2; and slots 2-3 and 6-7 in the slot table of the link of router R2 and network interface NI3, as the slot 3-4 in the slot table of the link of network interface NI2 and router R2 are already allocated to connection C4. Finally, connection C1 allocates one slot, namely slot 7, in the slot table of the link of network interface NI1 and router R1; slot 8 in the slot table of the link of router R1 and router R4; and slot 9 in the slot table of the link of router R4 and network interface NI6. Accordingly, the end result of the slot allocation is shown in Fig. 13.

After having performed the slot table allocation, the determination of the still unused bits can be performed in a similar manner as described above to identify those time slots which may be used for latency reduction by allocating these time slots to at least one of the connections.

Although in the above, the time slot allocation unit is described as being arranged in the network interfaces, the time slot allocation unit may also be arranged in the routers within the network.

The above described time slot allocation can be applied to any data processing device comprising several separated integrated circuits or multi-chip networks, not only to a network on a single chip.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. In the device claim enumerating several means, several of these means can be embodied by one and the same item of hardware. The mere fact that certain measures are recited in mutually different dependent claims does not indicate that a combination of these measures cannot be used to advantage.

Furthermore, any reference signs in the claims shall not be construed as limiting the scope of the claims.

**Claims**

1. Integrated circuit comprising a plurality of processing modules (M, S; IP) and a network (N) arranged for coupling said modules (M, S; IP), comprising:

   - a plurality of network interfaces (NI) each being coupled between one of said processing modules (M, S; IP) and said network (N);

   wherein said network (N) comprises a plurality of routers (R) coupled via network links (L) to adjacent routers (R); wherein said processing modules (M, S; IP) communicate between each other over connections using connection paths (C1-C12) through the network (N), wherein each of said connection paths (C1-C12) employ at least one network link (L) for a required number of time slots, and

   - at least one time slot allocating unit (SA) for allocating time slots to said network links (L), for determining unused time slots and for allocating the determined unused time slots to one or more of the connections using said network link in addition to its already allocated time slots.

2. Integrated circuit according to claim 1, wherein said at least one time slot allocating unit (SA) is adapted to determine said unused time slots for each network links (L) in said connection path, wherein consecutive unused time slots are allocated for consecutive network links (L).

3. Integrated circuit according to claim 1 or 2, wherein said at least one time slot allocating unit (SA) is adapted to allocate unused time slots to said connections according to a priority list stored in said time slot allocation unit (SA).

4. Integrated circuit according to claim 1, wherein said at least one time slot allocating unit (SA) comprises a marker unit (MU) for marking time slots of said network links (L) for reducing the latency of one of said connections.

5. Integrated circuit according to claim 1 or 2, wherein said at least one time slot allocating unit (SA) further comprises a time slot table (ST) with entries which are allocated to said connections, wherein said time slot table (ST) comprises one latency reduction bit.

6. Method for time slot allocation in an integrated circuit comprising a plurality of processing modules (M, S; IP) and a network (N) arranged for coupling said modules (M, S; IP), and a plurality of network interfaces (NI) each being coupled between one of said processing modules (M, S; IP) and said network (N) comprising a plurality of routers (R) coupled via network links (L) to adjacent routers (R); comprising the steps of:

   - communicating between processing modules (M, S; IP) over connections using connection paths (C1-C12) through the network (N), wherein each of said connection paths (C1-C12) employ at least one network link (L) for a required number of time slots,
   - allocating time slots to said network links (L),
   - determining unused time slots, and
   - allocating the determined unused time slots to one or more of the connections using the network link in addition to its already allocated time slots.

7. Data processing system comprising:

   - a plurality of processing modules (M, S; IP) and a network (N) arranged for coupling said modules (M, S; IP), comprising:

   - a plurality of network interfaces (NI) each being coupled between one of said processing modules (M, S; IP) and said network (N);

   wherein said network (N) comprises a plurality of routers (R) coupled via network links (L) to adjacent routers (R); wherein said processing modules (M, S; IP) communicate between each other over connections using connection paths (C1-C12) through the network (N), wherein each of said connection paths (C1-C12) employ at least one network link (L) for a required number of time slots,

   - at least one time slot allocating unit (SA) for allocating time slots to said network links (L), for determining unused time slots and for allocating the determined unused time slots to one or more of the connections using the network link in addition to its already allocated time slots.

Fig.1

Fig.2

Fig.3

Fig.4

Fig.5

Fig.6

Fig.7

MEM (p,n)

NI6

ST4-R

2*4

2*1
2*1

ST4-F

C2

R4

ST3-F

ST3-R

Fig.8

LO (p,n)

NI2

ST2-R

20

16
3

ST2-F

C1

R7

20

3
1

C2

C1

NI8

ST1-R

ME/MC

ST1-F

Fig.9

1st

fsw

L1

≫(1)

L2

OR

≫(1)

L3

OR

≫(1)

L4

OR

≪(3)

Fig.10

EP 1 605 727 A1

Fig.11

C₁ : 1 slot
C₂ : 1 slot
C₃ : 5 slot
C₄ : 2 slot
C₅ : 4 slot
C₆ : 3 slot
C₇ : 2 slot
C₈ : 6 slot
C₉ : 1 slot
C₁₀: 2 slot
C₁₁: 1 slot
C₁₂: 2 slot

$C_1 : 9 = 7 + 1 + 1$

$C_2 : 19 = 7 + 6 + 5 + 1$

$C_3 : 20 = 7 + 6 + 7$

$C_4 : 16 = 6 + 5 + 3 + 2$

$C_5 : 11 = 6 + 5$

$C_6 : 14 = 5 + 3 + 6$

$C_7 : 18 = 5 + 5 + 8$

$C_8 : 14 = 6 + 8$

$C_9 : 13 = 1 + 3 + 3 + 6$

$C_{10} : 15 = 2 + 3 + 3 + 7$

$C_{11} : 14 = 3 + 3 + 3 + 5$

$C_{12} : 12 = 3 + 3 + 6$

Fig.12

EP 1 605 727 A1

Fig.13

**European Patent Office**

## EUROPEAN SEARCH REPORT

Application Number

EP 04 10 2607

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | RIJPKEMA E ET AL: "Trade-offs in the design of a router with both guaranteed and best-effort services for networks on chip - DATE03" IEE PROCEEDINGS - COMPUTERS AND DIGITAL TECHNIQUES, vol. 150, no. 5, 22 September 2003 (2003-09-22), pages 294-302, XP006021112 ISSN: 1350-2387 * page 296; figure 3 * * page 297, left-hand column, paragraph 4 - right-hand column, paragraph 4.1.2 * * page 300, right-hand column, paragraph 4.3.3 * | 1-7 | H04Q11/04 H04J3/16 H04L12/43 |
| D,A | RIJPKEMA E ET AL: "A Router Architecture for Networks on Silicon" PROCEEDINGS OF PROGRESS 2001, 2ND WORKSHOP ON EMBEDDED SYSTEMS, October 2001 (2001-10), pages 181-188, XP002280718 * page 185, right-hand column, paragraph B * | 1-7 | |

TECHNICAL FIELDS SEARCHED (Int.Cl.7)

H04Q
H04J
H04L

The present search report has been drawn up for all claims

| Place of search | Date of completion of the search | Examiner |
|---|---|---|
| The Hague | 20 January 2005 | Vercauteren, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)